# EUROPEAN PATENT APPLICATION

(11) **EP 3 486 868 A1**
(43) Date of publication of application: **22.05.2019**
(21) Application number: 17827560.8
(22) Date of filing: 07.07.2017
(51) Int. Cl.: G06T 7/20, G06T 7/00, G08B 25/00, G08B 25/04, H04N 7/18

(54) **BEHAVIOR DETERMINATION DEVICE AND BEHAVIOR DETERMINATION METHOD**

(30) Priority: 12.07.2016 JP 2016137422
(71) Applicant: Konica Minolta, Inc., Tokyo 100-7015 (JP)
(72) Inventor: HORIE, Daisaku, Tokyo 100-7015 (JP)
(74) Representative: Gille Hrabal
(86) International application number: PCT/JP2017/024999
(87) International publication number: WO 2018/012432

(57) **Abstract**

An extraction unit extracts a human body area from a first image and a second image. A determination unit sets a plurality of first areas of interest used in determining whether or not a first behavior has been performed to the first image with an equal space therebetween and determines whether or not a monitored person has performed the first behavior on the basis of the plurality of first areas of interest and the human body area. A determination unit sets a second area of interest used in determining whether or not a second behavior has been performed to the second image with an equal space therebetween and determines whether or not a monitored person has performed the second behavior on the basis of the second area of interest and the human body area.

## Description

### Technical Field

The present invention relates to a technology for determining a behavior of a person who needs nursing or nursing care (referred to as person who needs nursing and the like below), for example.

### Background Art

In an aging society like Japan in recent years, an increase in the number of people who need nursing due to illness, injury, aging, and the like is expected to increase in the future.

Such a person who needs nursing and the like moves into a facility such as a hospital and an elderly welfare facility and takes nursing and nursing care. In the facilities such as a hospital and an elderly welfare facility, a person who gives nursing and nursing care (referred to as nurse and the like below) to the person who needs nursing and the like checks their safety by regularly visit them. However, since the number of nurses and the like is reduced and a workload per person increases in a time period of semi-night shift or night shift in comparison with a time period of day shift, reduction in the workload is requested. Therefore, in recent years, a monitored person monitoring device for monitoring the person who needs nursing and the like as a monitored person has been researched and developed.

As one of technologies regarding monitored person monitoring, there is a technology for determining a behavior of the monitored person. For example, Patent Literature 1 discloses a device which sets a bed area, a floor area, and a boundary of each area in an image, determines a getting-into-bed event when a movement of a human body for passing through the boundary and moving from the floor area to the bed area is detected, and determines a leaving-from-bed event when movement of the human body for passing through the boundary and moving from the bed area to the floor area is detected.

According to this technology, it is possible to determine behaviors for getting into the bed and for leaving from the bed among the behaviors of the monitored person.

The behavior of the monitored person for leaving from the bed includes behaviors for sitting on a side portion of the bed as putting the leg on the floor and standing up. Some monitored persons take a long time to leave from the bed, and there is a case where it can be seen that behaviors for getting out and getting into the bed are repeatedly performed due to behaviors for putting hands on the bed or twisting the body during a series of leaving-from-bed behaviors performed by such a monitored person. According to the technology in Patent Literature 1, in a case where the monitored person performs such a behavior, there is a possibility that determinations of getting-into-bed and leaving-from-bed are repeated (that is, there is a possibility that erroneous determination is made).

### Citation List

### Patent Literature

Patent Literature 1: JP 2002-230533 A

### Summary of Invention

An object of the present invention is to provide a behavior determination device and a behavior determination method capable of reducing erroneous determination.

A behavior determination device according to a first aspect of the present invention includes an acquisition unit, an extraction unit, and a determination unit. The acquisition unit acquires a first image and a second image in a predetermined range including a monitored person to be monitored. The extraction unit extracts human body areas from the first image and the second image. The determination unit performs first setting for setting a plurality of first areas of interest used in determining whether or not a predetermined first behavior has been performed to the first image with an equal space therebetween, determines whether or not the monitored person has performed the first behavior on the basis of the plurality of first areas of interest and the human body area, performs second setting for setting a second area of interest used in determining whether or not a predetermined second behavior has been performed in the second image, and determines whether or not the monitored person has performed the second behavior on the basis of the second area of interest and the human body area.

The above and other objects, features, and advantages of the present invention will be apparent from the following detailed description and the accompanying drawings.

### Brief Description of Drawings

Fig. 1 is an explanatory diagram for explaining a configuration of a monitored person monitoring system according to an embodiment.
Fig. 2 is a schematic diagram of a room in which a sensor device is arranged.
Fig. 3 is a block diagram of a configuration of the sensor device.
Fig. 4 is an explanatory diagram for explaining an image imaged by an imaging unit in a state where a monitored person is not in the room.
Fig. 5 is an explanatory diagram for explaining an image to which areas of interest are set.
Fig. 6 is a plan view of an area of interest used in determining whether or not a first behavior has been performed.
Fig. 7 is a plan view of an area of interest used in determining whether or not a second behavior has been performed.
Fig. 8 is an explanatory diagram for explaining an image in a state where the monitored person is performing the first behavior.
Fig. 9 is an explanatory diagram for explaining an image in a state where the monitored person is performing the second behavior.
Fig. 10 is an explanatory diagram for explaining a mode in which three areas of interest used in determining the first behavior are set.
Fig. 11 is a flowchart for explaining an operation when the sensor device operates as a behavior determination device.
Fig. 12 is an explanatory diagram for explaining an image imaged by an imaging unit arranged obliquely above a sleeping place.
Fig. 13 is an explanatory diagram for explaining an image to which the area of interest is set.
Fig. 14 is an explanatory diagram for explaining a frame (image) imaged by the imaging unit when the monitored person stands in front of the sleeping place.
Fig. 15 is an explanatory diagram for explaining a frame (image) imaged by the imaging unit when the monitored person sits on a side portion of the sleeping place.
Fig. 16 is an explanatory diagram for explaining a frame (image) imaged by the imaging unit when the monitored person puts legs into the sleeping place.
Fig. 17 is an explanatory diagram for explaining a frame (image) imaged by the imaging unit when the monitored person performs a behavior assumed as a behavior for leaving from the bed.

### Description of Embodiments

An embodiment of the present invention will be described in detail below with reference to the drawings. In the drawings, it is indicated that the components denoted with the same reference numeral are the same components, the description content of the component which has been already made is omitted. Here, a component which is collectively referred is indicated by a reference numeral with no suffix, and an individual component is indicated by a reference numeral with a suffix.

A monitored person monitoring system according to an embodiment is a system which monitors a monitored person who is a monitor target to be monitored (in other words, watching target to be watched) by using a plurality of devices and includes a terminal device and a monitored person monitoring device which is communicably connected to the terminal device, detects a predetermined event regarding the monitored person, and notifies the terminal device of the event. The monitored person monitoring device may be a single device which is integrally formed. However, here, the monitored person monitoring device includes two kinds of devices which are separated from each other by including a sensor device and a management server device communicably connected to the sensor device and the terminal device. The sensor device detects the predetermined event regarding the monitored person and notifies (inform or transmit) the management server device of the event. Upon receiving the notification from the sensor device, the management server device manages the notified event and renotifies (reinform or retransmit) a predetermined terminal device associated with the sensor device of the event. The terminal device may be one kind of device. However, here, the terminal includes two kinds of devices, i.e., a fixed terminal device and a mobile terminal device. A main difference between the fixed terminal device and the mobile terminal device is that the fixed terminal device is fixedly operated, and the mobile terminal device is carried and operated by a monitoring person (user), for example, a nurse and a care giver. Since the fixed terminal device and the mobile terminal device are substantially the same, the mobile terminal device will be mainly described below.

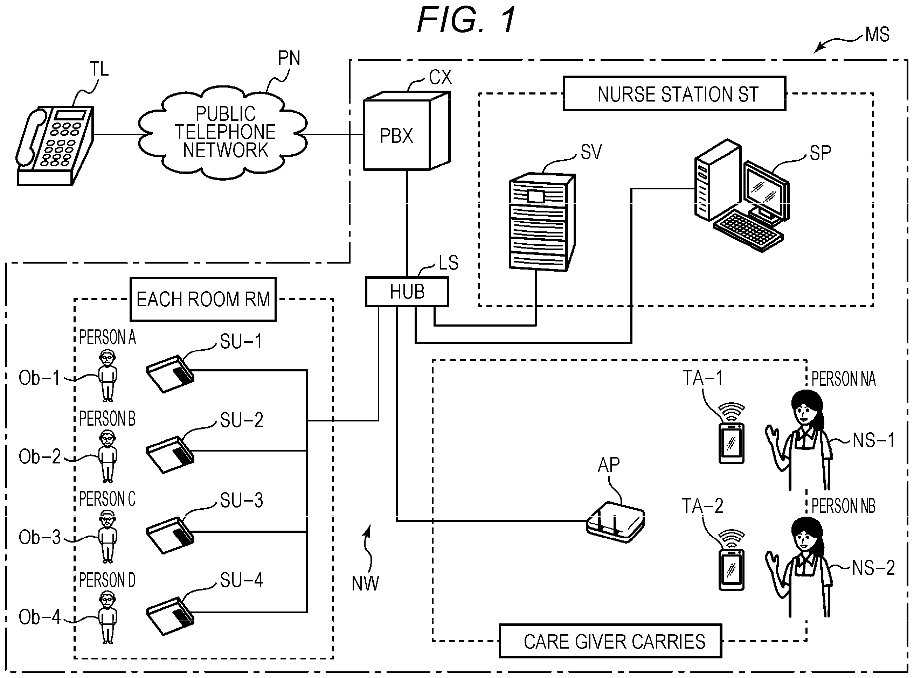

Fig. 1 is an explanatory diagram for explaining a configuration of a monitored person monitoring system MS according to an embodiment. More specifically, the monitored person monitoring system MS includes, for example, one or a plurality of sensor devices SU (SU-1 to SU-4), a management server device SV, a fixed terminal device SP, one or a plurality of mobile terminal devices TA (TA-1 and TA-2), and a Private Branch eXchange (PBX) CX, and these devices are wiredly or wirelessly and communicably connected via a network (network, communication line) NW such as a local area network (LAN). The network NW may include a relay such as a repeater, a bridge, and a router for relaying a communication signal. In the example illustrated in Fig. 1, the plurality of sensor devices SU-1 to SU-4, the management server device SV, the fixed terminal device SP, the plurality of mobile terminal devices TA-1 and TA-2, and the private branch exchange CX are communicably connected to each other with the LAN (for example, LAN compliant with IEEE802.11 standard) NW in which wired and wireless communications are mixed and which includes an L2 switch concentrator (hub or HUB) LS and an access point AP. More specifically, the plurality of sensor devices SU-1 to SU-4, the management server device SV, the fixed terminal device SP, and the private branch exchange CX are connected to the concentrator LS, and the plurality of mobile terminal devices TA-1 and TA-2 are connected to the concentrator LS via the access point AP. The network NW configures a so-called intranet by using a group of Internet protocols such as a Transimission Control Protocol (TCP) and an Internet Protocol (IP). The private branch exchange CX is connected to a telephone TL via a public telephone network PN.

The monitored person monitoring system MS is disposed at an appropriate position according to a monitored person Ob. The monitored person Ob is, for example, a person who needs nursing due to illness or injury, a person who needs nursing care due to a decrease in a physical ability and the like, and a person who lives alone. Particularly, from the viewpoint of enabling early detection and early treatment, it is preferable that the monitored person Ob is a person who needs to be found in a case where a predetermined unfavorable event such as an abnormal state occurs in the person. Therefore, the monitored person monitoring system MS is preferably disposed in a building such as a hospital, an elderly welfare facility, and a dwelling unit according to the type of the monitored person Ob. In the example illustrated in Fig. 1, the monitored person monitoring system MS is disposed a building of a nursing care facility including a plurality of rooms RM where the plurality of monitored persons Ob lives, a nurse station, and the like.

The sensor device SU has a communication function for communicating with other devices SV, SP, and TA via the network NW and the like, detects a predetermined event regarding the monitored person Ob and notifies the management server device SV of the detected event, performs voice communication with the terminal devices SP and TA, generates an image including a moving image, and distributes the moving image to the terminal devices SP and TA. The predetermined event preferably includes an event which needs to be coped with.

In Fig. 1, as an example, four sensor devices, i.e., first to fourth sensor devices SU-1 to SU-4 are illustrated. The first sensor device SU-1 is disposed in a room RM-1 (not shown) of a person A Ob-1 who is one of the monitored persons Ob, the second sensor device SU-2 is disposed in a room RM-2 (not shown) of a person B Ob-2 who is one of the monitored persons Ob, the third sensor device SU-3 is disposed in a room RM-3 (not shown) of a person C Ob-3 who is one of the monitored persons Ob, and the fourth sensor device SU-4 is disposed in a room RM-4 (not shown) of a person D Ob-4 who is one of the monitored persons Ob.

The management server device SV has a communication function for communicating with other devices SU, SP, and TA via the network NW and the like, and manages information regarding monitoring of the monitored person Ob (monitoring information) when receiving a notification of a predetermined event regarding the monitored person Ob from the sensor device SU. When receiving a first event notification communication signal as the notification of the event from the sensor device SU, the management server device SV stores (record) the monitoring information regarding the monitoring of the monitored person Ob based on each piece of information contained in the first event notification communication signal, and transmits a communication signal (second event notification communication signal) containing the monitoring information regarding the monitoring of the monitored person Ob to the predetermined terminal devices SP and TA which have been associated with the sensor device SU in advance. For this operation, the management server device SV stores correspondence relationship (notification destination correspondence relationship) between a sensor ID, which is a transmission source, indicating a notification destination of the first event notification communication signal and the like transmitted from the sensor device SU (re-notification destination, re-informing destination, and transmission destination) and a terminal ID which is a notification destination (re-notification destination) and a communication address of each ID. The terminal ID (terminal device identifier) is an identifier to specify and identify the terminal devices SP and TA. Then, the management server device SV provides data in response to a request of a client (fixed terminal device SP, mobile terminal device TA, and the like in the present embodiment) to the client. Such a management server device SV can be, for example, configured by a computer having a communication function.

The fixed terminal device SP functions as a user interface (UI) of the monitored person monitoring system MS. To achieve this function, the fixed terminal device SP has a communication function for communicating with the other devices SU, SV, and TA via the network NW, a display function for displaying predetermined information, an input function for inputting a predetermined instruction or data, and the like, and receives the predetermined instruction and data to be applied to the management server device SV and the mobile terminal device TA and displays the monitoring information acquired by the sensor device SU. Such a fixed terminal device SP can be, for example, configured by a computer having a communication function.

A monitoring person NS carries the mobile terminal device TA. The mobile terminal device TA has a communication function for communicating with the other devices SV, SP, and SU via the network NW, a display function for displaying predetermined information, an input function for inputting a predetermined instruction and data, a talking function for performing voice communication, and the like. The mobile terminal device TA receives inputs of the predetermined instruction and data to be applied to the management server device SV and the sensor device SU, displays the monitoring information (including moving image) acquired by the sensor device SU by the notification from the management server device SV, and responses or talks to a nurse call by the voice communication with the sensor device SU.

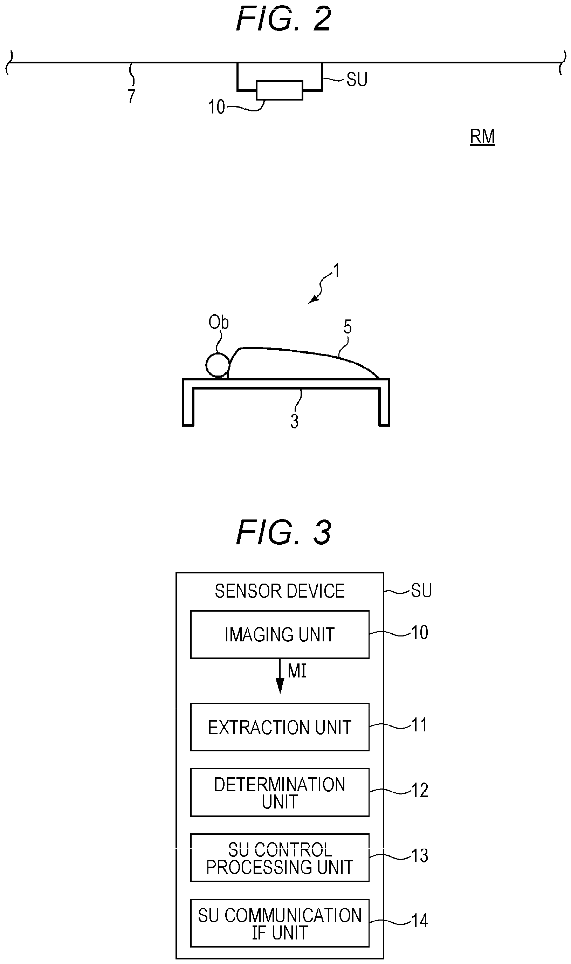

The sensor device SU has a function of a device for determining a behavior of the monitored person Ob (behavior determination device) in addition to the above functions (for example, function for imaging a moving image of the monitored person Ob and function for performing voice communication with the terminal devices SP and TA). From the viewpoint of this function, the sensor device SU will be described in detail. Fig. 2 is a schematic diagram of a room RM in which the sensor device SU is arranged. In the room RM, a sleeping place 1 of the monitored person Ob is provided. The sleeping place 1 is a futon 5 placed on a bed 3. The sleeping place 1 is not limited to this, and for example, may be the futon 5 placed on tatami and may be the futon 5 placed on a floor. Fig. 2 illustrates a state where the monitored person Ob is sleeping on the sleeping place 1, and only the head in the body of the monitored person Ob appears. The sensor device SU is attached to a ceiling 7 of the room RM

Fig. 3 is a block diagram of a configuration of the sensor device SU (behavior determination device). The sensor device SU includes an imaging unit 10, an extraction unit 11, a determination unit 12, a sensor-side control processing unit (SU control processing unit) 13, and a sensor-side communication interface unit (SU communication IF unit) 14. In Fig. 2, from among blocks included in the sensor device SU, the imaging unit 10 is illustrated, and other blocks are omitted.

With reference to Figs. 2 and 3, the imaging unit 10 images an imaging target and generates an image of the imaging target. The image includes a still image and a moving image. The imaging unit 10 is arranged so as to monitor a space where the monitored person Ob is scheduled to be located (location space, room RM where imaging unit 10 is disposed in example in Fig. 1), images the location space from above as an imaging target, and generates a bird's-eye image of the imaging target. Preferably, since probability that the entire monitored person Ob can be imaged is high, the imaging unit 10 is disposed so as to image the imaging target from just above a preset head planned position where the head of the monitored person Ob is planned to be placed (normally, position where pillow is disposed) in a bedding (for example, bed) where the monitored person Ob lies. The sensor device SU acquires an image of the monitored person Ob imaged from above the monitored person Ob, preferably, an image imaged from just above the head planned position by the imaging unit 10.

Such an imaging unit 10 may be a device which generates an image of visible light. However, in the embodiment, the imaging unit 10 is a device which generates an image of infrared rays so as to monitor the monitored person Ob in a relatively dark place. For example, in the embodiment, such an imaging unit 10 is a digital infrared camera including an image optical system which forms an infrared optical image of the imaging target on a predetermined image forming surface, an image sensor which is arranged so that a light receiving surface coincides with the image forming surface and converts the infrared optical image of the imaging target into an electrical signal, and an image processing unit which generates image data indicating the infrared image of the imaging target by performing image processing on an output of the image sensor. In the embodiment, the image optical system of the imaging unit 10 is preferably a wide angle optical system having an angle of view capable of imaging the entire room RM where the image optical system is disposed (so-called wide-angle lens (including fisheye lens)).

The imaging unit 10 is not limited to a camera such as an infrared camera, and for example, may be a thermography and a three-dimensional sensor.

The imaging unit 10 functions as an acquisition unit for acquiring a first image and a second image in a predetermined range including the monitored person Ob. The embodiment will be described using a case where the image imaged by the imaging unit 10 is a moving image MI as an example. However, the image imaged by the imaging unit 10 is not limited to the moving image MI and may be a plurality of images arranged in a time series manner.

The extraction unit 11 extracts a moving object area from each frame (image) included in the moving image MI imaged by the imaging unit 10 and sets the extracted moving object area as a human body area. The moving object area is extracted from the frame by a method such as background subtraction and optical flow.

The extraction unit 11 is, for example, realized by hardware such as a central processing unit (CPU), a random access memory (RAM), a read only memory (ROM), and a hard disk drive (HDD) and a program and data to execute the function of the extraction unit 11. All of or a part of the functions of the extraction unit 11 may be realized by processing by a digital signal processor (DSP) instead of or together with the processing by the CPU. Similarly, all of or a part of the functions of the extraction unit 11 may be realized by processing by a dedicated hardware circuit instead of or together with processing by software. The same which has been described above is applied to the determination unit 12 and the SU control processing unit 13 to be described later.

The determination unit 12 has a function for determining whether or not the monitored person Ob has performed a first behavior and a function for determining whether or not the monitored person Ob has performed a second behavior. Details of the determination unit 12 will be described later.

The SU communication IF unit 14 is a communication circuit which is connected to the SU control processing unit 13 and performs communication under control of the SU control processing unit 13. The SU communication IF unit 14 generates a communication signal containing data, which is input from the SU control processing unit 13, to be transferred according to a communication protocol used in the network NW of the monitored person monitoring system MS and transmits the generated communication signal to the other devices SV, SP, and TA via the network NW. The SU communication IF unit 14 receives the communication signal from the other devices SV, SP, and TA via the network NW, extracts data from the received communication signal, converts the extracted data into data in a format which can be processed by the SU control processing unit 13, and outputs the data to the SU control processing unit 13. The SU communication IF unit 14 includes, for example, a communication interface circuit compliant with IEEE802.11 standard and the like.

The SU control processing unit 13 controls each unit (imaging unit 10, extraction unit 11, determination unit 12, and SU communication IF unit 14) of the sensor device SU according to the function of each unit, detects a predetermined event regarding the monitored person Ob, notifies the management server device SV of the detected event, performs voice communication with the terminal devices SP and TA, generates an image including a moving image, and distributes the moving image to the terminal devices SP and TA.

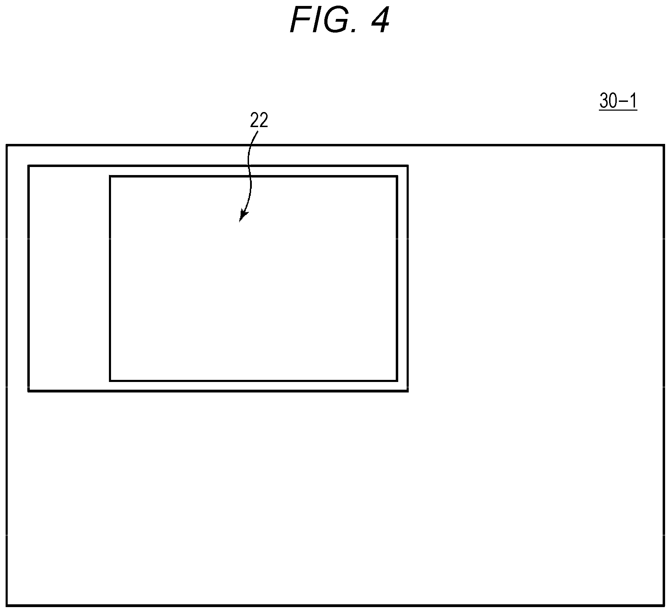

Fig. 4 is an explanatory diagram for explaining an image 30-1 imaged by the imaging unit 10 in a state where the monitored person Ob is not in the room RM as illustrated in Fig. 2. The imaging unit 10 is positioned right above the sleeping place 1 (Fig. 2). The imaging unit 10 photographs the entire room RM. The image 30-1 includes an area indicating the sleeping place 1 (referred to as sleeping place area 22 below). The sleeping place area 22 has a rectangular shape.

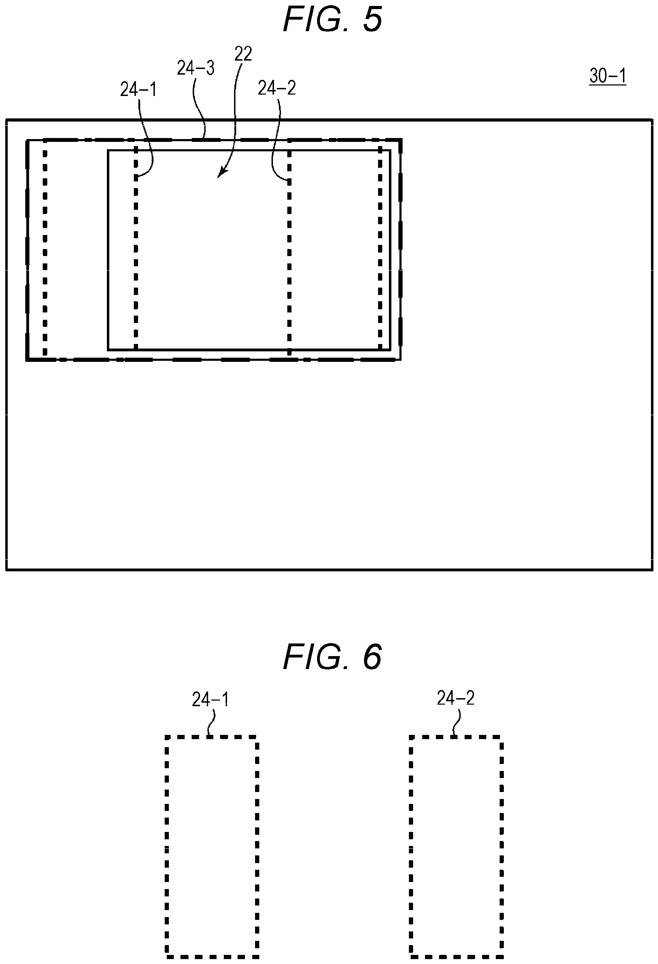

An area of interest is set to the image 30-1. Fig. 5 is an explanatory diagram for explaining the image 30-1 to which areas of interest 24 are set. The determination unit 12 stores position information of the area of interest 24 (areas of interest 24-1 to 24-3) on the sleeping place area 22 in advance. A setter (user, seller, and the like of monitored person monitoring device MS) sees the image 30-1 of the room RM including the sleeping place area 22 (image of bed) and specifies the position of the sleeping place area 22. With this operation, the determination unit 12 automatically sets the position of the area of interest 24 on the image 30-1 and stores the position information. The determination unit 12 automatically sets the area of interest 24 for each frame (image) included to a moving image imaged by the imaging unit 10, by using the position information. The setter may set the position of the area of interest 24 on the image 30-1 by seeing the image 30-1 and specifying the position of the area of interest 24 and may make setting for correcting the position of the area of interest 24 in the image 30-1 by seeing the image 30-1 and correcting the position of the area of interest 24 which has been automatically set by the determination unit 12. The determination unit 12 stores the position information of the above. The determination unit 12 automatically sets the area of interest 24 for each frame (image) included to a moving image imaged by the imaging unit 10, by using the position information.

Two areas of interest 24 (areas of interest 24-1 and 24-2) are set to the image 30-1. Fig. 6 is a plan view of the areas of interest 24-1 and 24-2. With reference to Figs. 5 and 6, the areas of interest 24-1 and 24-2 are an example of a plurality of first areas of interest and are used in determining whether or not the first behavior has been performed. As the first behavior, an example will be described in which the monitored person Ob lies on the sleeping place 1. However, the first behavior is not limited to this. The state where the monitored person Ob lies on the sleeping place 1 may be a state where the monitored person Ob is sleeping or is awakening.

Each of the areas of interest 24-1 and 24-2 has a rectangular shape, and the areas of interest 24-1 and 24-2 are set with an equal space along a longitudinal direction of the sleeping place area 22. The long sides of the areas of interest 24-1 and 24-2 are parallel to the short sides of the sleeping place area 22. The short sides of the areas of interest 24-1 and 24-2 are parallel to the long sides of the sleeping place area 22 and are positioned on the long sides of the sleeping place area 22. The area of interest 24-1 is an area including a portion where the head of the monitored person Ob (in other words, pillow) is positioned. The area of interest 24-2 is an area including a portion covering the legs of the monitored person Ob in the futon 5 (Fig. 2).

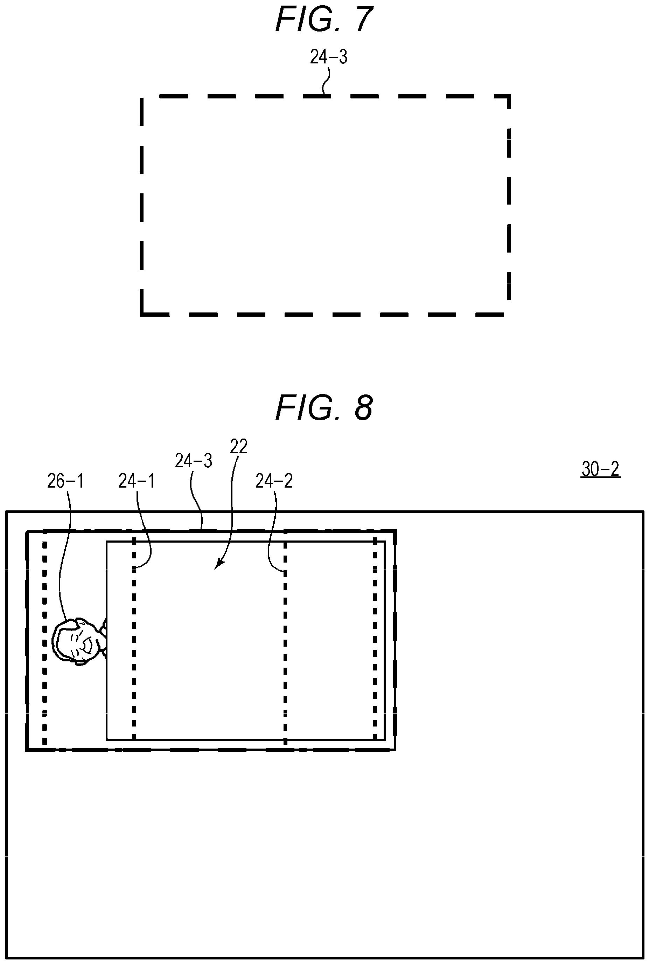

An area of interest 24-3 is set to the image 30-1. Fig. 7 is a plan view of the area of interest 24-3. With reference to Figs. 5 and 7, the area of interest 24-3 is an example of a second area of interest and is used in determining whether or not the second behavior has been performed. As the second behavior, an example will be described in which the monitored person Ob takes out a part of the body (leg) from the sleeping place 1. However, the second behavior is not limited to this.

The area of interest 24-3 has a rectangular shape and overlaps with the sleeping place area 22. In Fig. 5, a line defining the area of interest 24-3 is positioned on a line defining the sleeping place area 22. However, the lines are not limited to this, and it is possible that the line defining the area of interest 24-3 may be slightly different from the line defining the sleeping place area 22. For example, the area of interest 24-3 may be positioned on a slightly inner side of the sleeping place area 22, and the area of interest 24-3 may be positioned on a slightly outer side of the sleeping place area 22.

An example has been described in which the plurality of first areas of interest (areas of interest 24-1 and 24-2) and the second area of interest (area of interest 24-3) are set to the same image 30-1. However, the first areas of interest and the second area of interest may be set to different images.

With reference to Figs. 3 and 5, the determination unit 12 stores the position information indicating the positions of the areas of interest 24-1, 24-2, and 24-3 in the image 30-1 in advance. The position of the sleeping place area 22 in each frame included in the moving image MI imaged by the imaging unit 10 is the same as the position of the sleeping place area 22 in the image 30-1. Therefore, when the determination unit 12 sets the areas of interest 24-1, 24-2, and 24-3 for each frame, the setting is similar to the setting illustrated in Fig. 5.

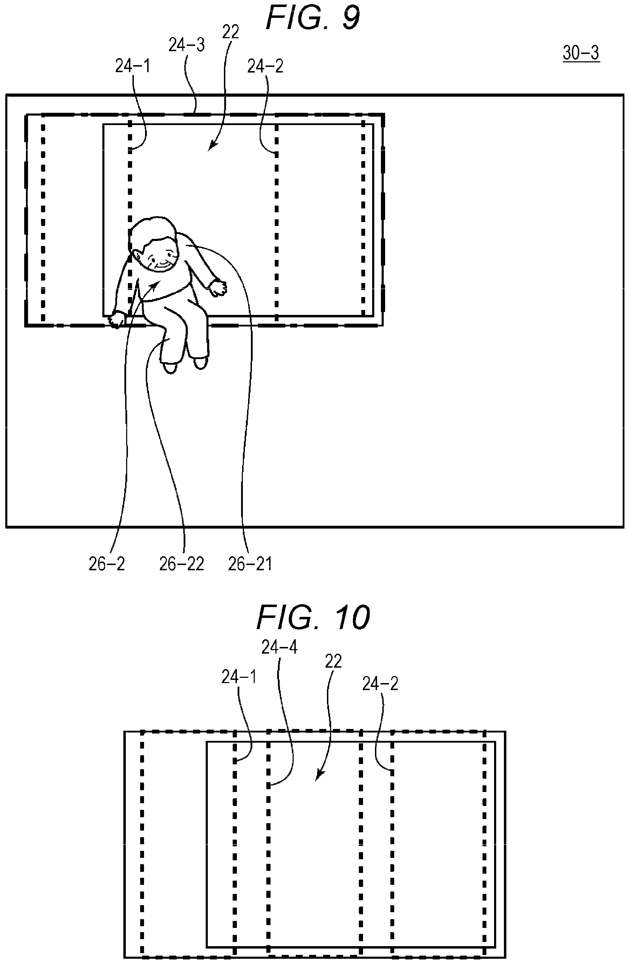

The determination unit 12 sets the areas of interest 24-1, 24-2, and 24-3 for each frame of the moving image MI imaged by the imaging unit 10, determines whether or not the monitored person Ob has performed the first behavior (monitored person Ob lies on sleeping place 1) by using the areas of interest 24 and the human body area extracted by the extraction unit 11, and determines whether or not the monitored person Ob has performed the second behavior (monitored person Ob takes out a part of body from sleeping place 1). Fig. 8 is an explanatory diagram for explaining an image 30-2 in a state where the monitored person Ob is performing the first behavior. Fig. 9 is an explanatory diagram for explaining an image 30-3 in a state where the monitored person Ob is performing the second behavior. In Figs. 8 and 9, an area indicating the monitored person Ob is assumed as a monitored person area 26. A monitored person area 26-1 illustrated in Fig. 8 corresponds to an image of the head of the monitored person Ob. A monitored person area 26-2 illustrated in Fig. 9 corresponds an image in which the monitored person Ob sits on the side portion of the bed 3 (Fig. 2) and one leg is takes out from the bed 3. The monitored person area 26-2 includes a monitored person area 26-21 positioned in the area of interest 24-3 and a monitored person area 26-22 positioned outside the area of interest 24-3.

A determination algorithm of the first behavior will be described. With reference to Figs. 3 and 8, when the head of the monitored person Ob moves in a state where the head of the monitored person Ob (that is, monitored person area 26-1) is positioned in the area of interest 24-1, the extraction unit 11 extracts an area moved in association with the above movement as a human body area. In this case, the monitored person area 26-1 is extracted as the human body area.

When the leg of the monitored person Ob moves in a state where the leg of the monitored person Ob is positioned in the area of interest 24-2 (leg is under futon 5 illustrated in Fig. 2), the extraction unit 11 extracts an area moved in association with the above movement as a human body area. In this case, not the area indicating the leg, the portion which moves according to the movement of the leg of the monitored person Ob in the futon 5 is extracted as the human body area.

If an area of the human body area is small, it may be noise. Therefore, the determination unit 12 may determine the human body area by using the following method. The determination unit 12 sets the human body area extracted by the extraction unit 11 as a human body area candidate. Regarding a human body area candidate positioned in the area of interest 24-1, the determination unit 12 determines whether or not a ratio of an area of the human body area candidate relative to an area of the area of interest 24-1 (the number of pixels in human body area candidate ÷ the number of pixels in area of interest 24-1) exceeds a predetermined first threshold. When the ratio exceeds the first threshold, the determination unit 12 determines that the human body area candidate is the human body area. The similar processing is applied to a human body area candidate positioned in the area of interest 24-2. Note that the first threshold applied to the area of interest 24-1 may be the same as or different from a first threshold applied to the area of interest 24-2. If the optimum first threshold of the area of interest 24-1 is the same as that in the area of interest 24-2, the first thresholds are the same. If the optimum first threshold of the area of interest 24-1 is different from that in the area of interest 24-2, the first thresholds are different from each other.

When a person lies on the sleeping place 1, human body areas respectively exist in the areas of interest 24-1 and 24-2 (that is, in all of areas of interest 24-1 and 24-2). Therefore, when the human body areas respectively exist in the areas of interest 24-1 and 24-2, the determination unit 12 determines that the monitored person Ob has performed the first behavior.

Normally, when a person gets into the sleeping place 1 and lies on the sleeping place 1, the head and the legs are not placed on the sleeping place 1 at the same time, the legs are placed on the sleeping place 1 first, and then, the head is placed on the sleeping place 1. Therefore, after determining that the human body area (leg) exists in the area of interest 24-2 corresponding to the legs, the determination unit 12 determines that the human body area (head) exists in the area of interest 24-1 corresponding to the head. In consideration of the above, when determining that the human body areas exist in the respective areas of interest 24-1 and 24-2 within a predetermined period (for example, ten seconds), the determination unit 12 determines that the monitored person Ob has performed the first behavior. In other words, the determination unit 12 determines that the human body areas exist in the respective areas of interest 24-1 and 24-2, when determining that the human body area exists in the other one of the areas of interest 24-1 and 24-2 within the predetermined period (for example, ten seconds) from the above determination, the determination unit 12 determines that the human body area exists in one of the areas of interest 24-1 and 24-2, and then, determines that the monitored person Ob has performed the first behavior.

An example has been described in which the area of interest 24-1 is positioned in the area including the head of the monitored person Ob and the area of interest 24-2 is positioned in the area including the leg of the monitored person Ob. However, if it can be determined that the monitored person Ob lies, the positions of the areas of interest 24-1 and 24-2 are not limited to the above. For example, a mode may be used in which the area of interest 24-1 is positioned in the area including the head of the monitored person Ob and the area of interest 24-2 is positioned in the area including the abdomen of the monitored person Ob, and a mode may be used in which the area of interest 24-1 is positioned in the area including the abdomen of the monitored person Ob and the area of interest 24-2 is positioned in the area including the leg of the monitored person Ob.

An example has been described in which each of the areas of interest 24-1 and 24-2 has a rectangular shape. However, if it can be determined that the monitored person Ob lies, the shape is not limited to the rectangle. For example, the shape of each of the areas of interest 24-1 and 24-2 may be a square.

A case where the areas of the areas of interest 24-1 and 24-2 are the same has been described as an example. However, if it can be determined that the monitored person Ob lies, the areas of the areas of interest 24-1 and 24-2 are not limited to the above.

An example has been described in which the two areas of interest 24 (areas of interest 24-1 and 24-2) are used in determining the first behavior. However, it is preferable that the number of areas of interest be plural. If it can be determined that the monitored person Ob lies, the number is not limited to two. A mode in which the number of areas of interest 24 is three will be described as an example. Fig. 10 is an explanatory diagram for explaining a mode in which three areas of interest 24 used in determining the first behavior are set. Areas of interest 24-1, 24-4, and 24-2 are set along the longitudinal direction of the sleeping place area 22 with an equal space therebetween. The area of interest 24-4 is an area including the abdomen of the monitored person Ob. When the abdomen of the monitored person Ob moves in a state where the abdomen of the monitored person Ob is positioned in the area of interest 24-4 (abdomen is positioned under futon 5 illustrated in Fig. 2), the extraction unit 11 (Fig. 3) extracts the area moved in association with the above movement as a human body area.

When the determination unit 12 determines that a human body area exists in any one of the areas of interest 24-1, 24-2, and 24-4 and determines that the human body areas exist in the other two areas of interest 24 within a predetermined period (for example, ten seconds) from the above determination, the determination unit 12 determines that the monitored person Ob has performed the first behavior.

A determination algorithm of the second behavior will be described. With reference to Figs. 3 and 9, the determination unit 12 determines whether or not the human body area exists in the area of interest 24-3 and the human body area continuing from the human body area in the area of interest 24-3 is positioned outside the area of interest 24-3. The monitored person area 26-21 is a human body area positioned in the area of interest 24-3, and the monitored person area 26-22 is a human body area positioned outside the area of interest 24-3.

For example, when the number of pixels in the monitored person area 26-22 ÷ (the number of pixels in monitored person area 26-21 + the number of pixels in monitored person area 26-22) exceeds a predetermined second threshold, the determination unit 12 determines that the second behavior has been performed. For example, the method for determining whether or not the second behavior has been performed is not limited to this. For example, when the number of pixels in the monitored person area 26-22 exceeds a predetermined third threshold, the determination unit 12 may determine that the second behavior has been performed.

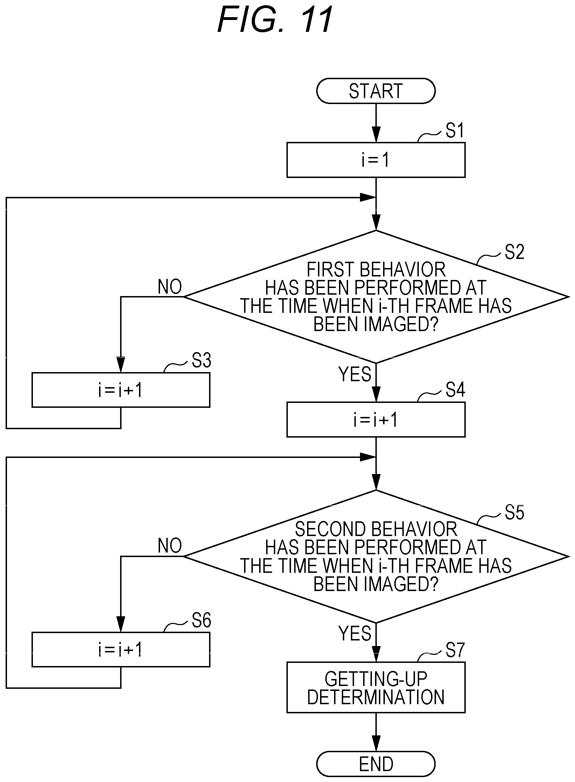

The sensor device SU functions as the behavior determination device. An operation of the sensor device SU at this time will be described. Fig. 11 is a flowchart for explaining this operation. With reference to Figs. 3 and 11, the determination unit 12 sets "i" to "1" (step S1). The character "i" indicates an order of the frame included in the moving image MI imaged by the imaging unit 10. The character "1" means a first frame.

The determination unit 12 performs processing of a first behavior determination algorithm on the first frame. With this processing, at the time when the first frame is imaged, the determination unit 12 determines whether or not the monitored person Ob has performed the first behavior (step S2). When the monitored person Ob gets into and lies on the sleeping place 1 (Fig. 2), the determination unit 12 determines that the monitored person Ob has performed the first behavior.

When the determination unit 12 has determined that the monitored person Ob has not performed the first behavior at the time when the first frame is imaged (No in step S2), the determination unit 12 sets "i + 1" to "i" (step S3). Here, "i" is set to "2".

The determination unit 12 performs processing of the first behavior determination algorithm on a second frame. With this processing, at the time when the second frame is imaged, the determination unit 12 determines whether or not the monitored person Ob has performed the first behavior (step S2).

When the determination unit 12 has determined that the monitored person Ob has not performed the first behavior at the time when the second frame is imaged (No in step S2), the determination unit 12 sets "i + 1" to "i" (step S3). Here, "i" is set to "3". Hereinafter, until the monitored person Ob performs the first behavior, the determination unit 12 repeats processing in steps S2 and S3.

For example, when the determination unit 12 has determined that the monitored person Ob has performed the first behavior at the time when a j-th frame is imaged (Yes in step S2), the determination unit 12 sets "i + 1" to "i" (step S4). Here, "i" is set to "j + 1".

The determination unit 12 performs processing of a second behavior determination algorithm on an i-th (j + 1-th) frame. With this processing, at the time when the i-th (j + 1-th) frame is imaged, the determination unit 12 determines whether or not the monitored person Ob has performed the second behavior (step S5).

When the determination unit 12 has determined that the monitored person Ob has not performed the second behavior at the time when the i-th (j + 1-th) frame is imaged (No in step S5), the determination unit 12 sets "i + 1" to "i" (step S6). Here, "i" is set to "j + 2". Hereinafter, until the monitored person Ob performs the second behavior, the determination unit 12 repeats processing in steps S5 and S6.

For example, when the determination unit 12 has determined that the monitored person Ob has performed the second behavior at the time when a k-th frame is imaged (Yes in step S5), the determination unit 12 determines that the monitored person Ob has got up (step S7).

A main effect of the embodiment will be described. In the embodiment, attention is paid to the fact that when a person gets up, the person lies on the sleeping place 1 (Fig. 2) as a premise. With reference to Figs. 3 and 11, when the determination unit 12 determines that the monitored person Ob lies on the sleeping place 1 (determination that the first behavior has been performed) (Yes in step S2) and subsequently determines that the monitored person Ob takes out a part of the body (for example, leg) from the sleeping place 1 (determination that the second behavior has been performed) (Yes in step S5), the determination unit 12 determines that the monitored person Ob has got up (step S7).

When the monitored person Ob who lies on the sleeping place 1 gets up, the monitored person Ob performs a behavior for raising the upper body, performs a behavior for sitting on the side portion of the sleeping place 1 and putting the feet on the floor, and then, performs a behavior for standing up as a series of behaviors. The behavior for sitting on the side portion of the sleeping place 1 and putting the feet on the floor corresponds to the second behavior according to the embodiment. A method is considered for determining that the person has got up on the basis of only determination that the monitored person Ob has performed the second behavior. Some of the monitored persons Ob cannot smoothly perform the behavior for sitting on the side portion on the sleeping place 1, putting the feet on the floor, and standing up due to weak muscles. Such a person swings while sitting on the side portion of the sleeping place 1 and stands up by using the recoil. In a case where the monitored person Ob has performed such a behavior, there is a possibility that the determination indicating that the monitored person Ob has get up is repeated only by the second behavior determination algorithm (that is, there is a possibility that erroneous determination is made). With reference to Fig. 1, if the sensor device SU informs the mobile terminal device TA each time when determining that the monitored person Ob gets up, the information that the monitored person Ob gets up is repeated, and the monitoring person NS needs to confirm the mobile terminal device TA at each time when the information is received. Therefore, a burden of the monitoring person NS increases.

On the other hand, as described above, in the embodiment, when it is determined that the monitored person Ob takes out a part of the body from the sleeping place 1 (determination that the second behavior has been performed) after it is determined that the monitored person Ob lies on the sleeping place 1 (determination that the first behavior has been performed), it is determined that the monitored person Ob has got up. According to the embodiment, it is possible to reduce erroneous determination that the monitored person Ob has got up in comparison with the method for determining that the monitored person Ob has got up on the basis of only the determination that the monitored person Ob has performed the second behavior.

A first modification and a second modification are included in the embodiment. The first modification will be described. In the embodiment, when the monitored person Ob has performed the second behavior after the monitored person Ob has performed the first behavior, it is determined that the monitored person Ob has got up. In the first modification, when the monitored person Ob performs the second behavior after the monitored person Ob has performed the first behavior, it is determined that the monitored person Ob has left the bed.

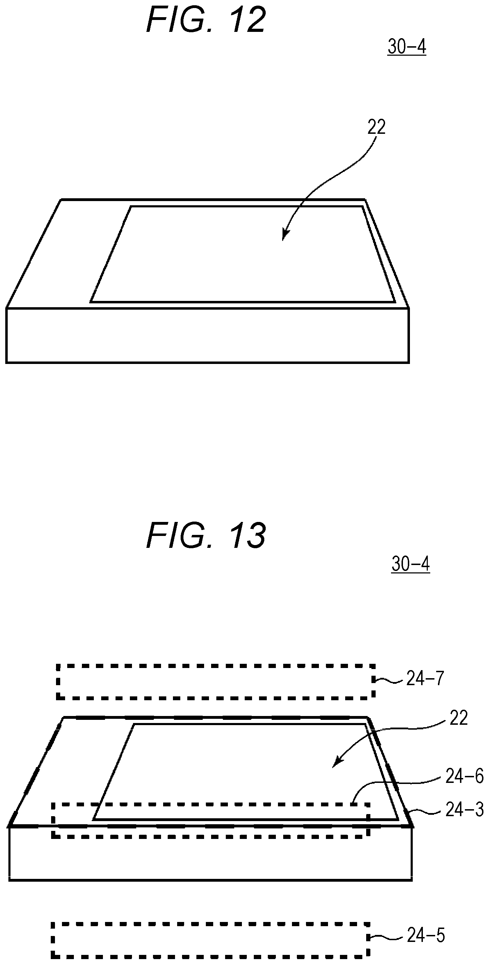

In the first modification, the imaging unit 10 illustrated in Fig. 2 is arranged obliquely above the sleeping place 1. Fig. 12 is an explanatory diagram for explaining an image 30-4 imaged by the imaging unit 10 arranged obliquely above the sleeping place 1. The image 30-4 includes the sleeping place area 22. The sleeping place area 22 is three-dimensionally photographed. On the image 30-1 illustrated in Fig. 4, the line defining the image 30-1 is illustrated. However, on the image 30-4 illustrated in Fig. 12, a line defining the image 30-4 is omitted.

An area of interest is set to the image 30-4. Fig. 13 is an explanatory diagram for explaining the image 30-4 in which an area of interest 24 is set. The area of interest 24-3 is set to the image 30-4. The area of interest 24-3 is the same as the area of interest 24-3 illustrated in Fig. 5. The area of interest 24-3 is used to determine whether or not the second behavior has been performed. In the first modification, the second behavior is a behavior used to estimate that the monitored person Ob has left the bed.

Three areas of interest 24 (areas of interest 24-5, 24-6, and 24-7) are set to the image 30-4. The areas of interest 24-5, 24-6, and 24-7 are an example of a plurality of first areas of interest and are used in determining whether or not the first behavior has been performed. In the first modification, the first behavior is a behavior that the monitored person Ob gets in the sleeping place 1.

Each of the areas of interest 24-5, 24-6, and 24-7 has a rectangular shape, and the longitudinal directions of the areas of interest 24-5, 24-6, and 24-7 are the same as the longitudinal direction of the sleeping place area 22. The areas of interest 24-5, 24-6, and 24-7 are set along the direction perpendicular to the longitudinal direction with an equal space therebetween. The area of interest 24-6 is set between the areas of interest 24-5 and 24-7.

The area of interest 24-6 is an intermediate area of interest overlapping with the sleeping place area 22 in the image 30-4. The area of interest 24-6 overlaps with the area of interest 24-3 in the side portion of the sleeping place area 22. The area of interest 24-6 corresponds to a place where the monitored person Ob sits on the side portion of the sleeping place 1. The area of interest 24-5 is a lower area of interest positioned below the intermediate area of interest in the image 30-4. The area of interest 24-7 is an upper area of interest positioned above the intermediate area of interest in the image 30-4.

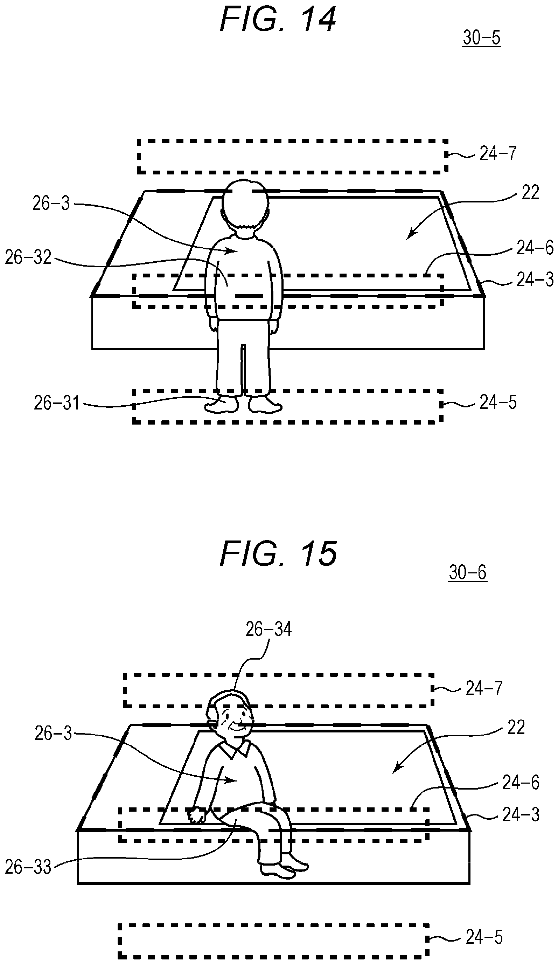

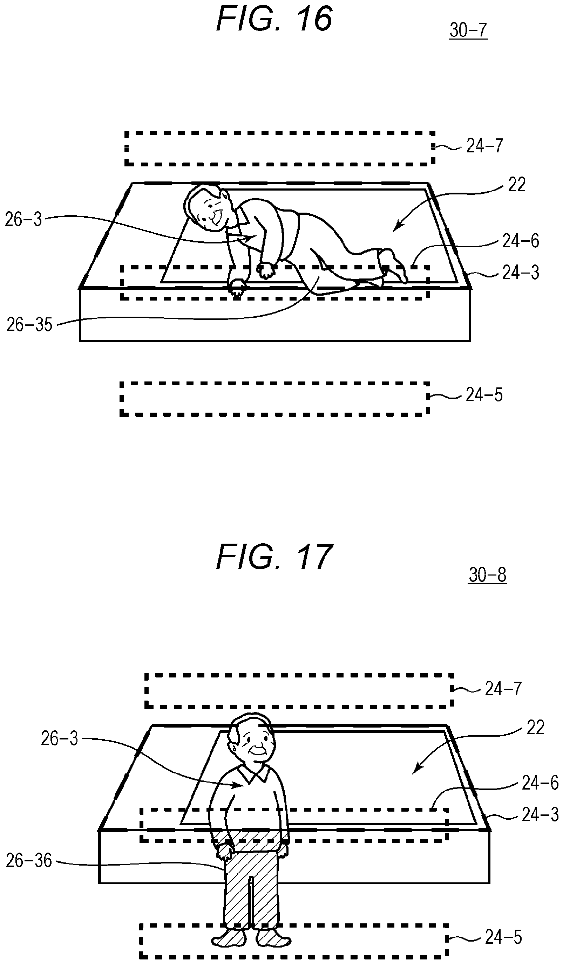

Fig. 14 is an explanatory diagram for explaining a frame (image 30-5) imaged by the imaging unit 10 when the monitored person Ob stands in front of the sleeping place 1. Fig. 15 is an explanatory diagram for explaining a frame (image 30-6) imaged by the imaging unit 10 when the monitored person Ob sits on the side portion of the sleeping place 1. Fig. 16 is an explanatory diagram for explaining a frame (image 30-7) imaged by the imaging unit 10 when the monitored person Ob puts the legs into the sleeping place 1. Similarly to the image 30-4 illustrated in Fig. 12, lines defining these images are omitted. In Figs. 14 to 16, a monitored person area 26-3 corresponds to an image of an entire body of the monitored person Ob.

With reference to Fig. 14, the area of interest 24-5 (lower area of interest) and the area of interest 24-6 (intermediate area of interest) include a part of the body of the monitored person Ob when the monitored person Ob stands in front of the sleeping place 1. Here, the area of interest 24-5 is an area including a part of the leg of the monitored person Ob. An area where this area and the area of interest 24-5 overlap with each other is a monitored person area 26-31. The area of interest 24-6 is an area including a part of an arm or a back of the monitored person Ob. An area where this area and the area of interest 24-6 overlap with each other is a monitored person area 26-32.

With reference to Fig. 15, the area of interest 24-6 (intermediate area of interest) and the area of interest 24-7 (upper area of interest) include a part of the body of the monitored person Ob when the monitored person Ob sits on the side portion of the sleeping place 1. Here, the area of interest 24-6 is an area including a part of the leg and a waist of the monitored person Ob. An area where this area and the area of interest 24-6 overlap with each other is a monitored person area 26-33. The area of interest 24-7 is an area including a part of the head of the monitored person Ob. An area where this area and the area of interest 24-7 overlap with each other is a monitored person area 26-34.

With reference to Fig. 16, the area of interest 24-6 (intermediate area of interest) is an area including a part of the body of the monitored person Ob when the monitored person Ob puts the leg in the sleeping place 1. Here, the area of interest 24-6 is an area including a part of the arm and a part of the leg of the monitored person Ob. An area where this area and the area of interest 24-6 overlap with each other is a monitored person area 26-35.

A determination algorithm of the first behavior will be described. With reference to Figs. 3 and 14, when the monitored person Ob performs a behavior for moving closer to the sleeping place 1, the extraction unit 11 extracts the monitored person area 26-31 positioned in the area of interest 24-5 as a human body area and extracts the monitored person area 26-32 positioned in the area of interest 24-6 as a human body area.

With reference to Figs. 3 and 15, when the monitored person Ob performs a behavior for sitting on the side portion of the sleeping place 1, the extraction unit 11 extracts the monitored person area 26-33 positioned in the area of interest 24-6 as a human body area and extracts the monitored person area 26-34 positioned in the area of interest 24-7 as a human body area.

With reference to Figs. 3 and 16, when the monitored person Ob performs a behavior for putting the leg in the sleeping place 1, the extraction unit 11 extracts the monitored person area 26-35 positioned in the area of interest 24-6 as a human body area.

The method for extracting the human body area described with reference to Figs. 14 to 16 is the same as that in the embodiment.

It is assumed that the determination unit 12 determine that the human body areas exist in the areas of interest 24-5 and 24-6 and that the human body area does not exist in the area of interest 24-7 (Fig. 14) first, subsequently determine that the human body areas exist in the areas of interest 24-6 and 24-7 and that the human body area does not exist in the area of interest 24-5 (Fig. 15), and finally determine that the human body area exists in the area of interest 24-6 and that the human body area does not exist in the areas of interest 24-5 and 24-7 (Fig. 16). When the determination unit 12 has made these three determinations in a predetermined period (for example, 60 seconds), the determination unit 12 determines that the monitored person Ob has performed the behavior for getting in the sleeping place 1 (first behavior).

A determination algorithm of the second behavior will be described. Fig. 17 is an explanatory diagram for explaining a frame (image 30-8) imaged by the imaging unit 10 when the monitored person Ob performs a behavior assumed as a behavior for leaving from the bed. An area in which an area outside the area of interest 24-3 and the monitored person Ob overlap with each other is a monitored person area 26-36 (region indicated by hatching). For example, when an area (the number of pixels) of the monitored person area 26-36 exceeds a predetermined fourth threshold, the determination unit 12 determines that the monitored person Ob has performed the second behavior (behavior estimated as behavior for leaving from the bed).

A main effect of the first modification will be described. In the first modification, attention is paid to the fact that when a person leaves from the bed, the person performs a behavior for getting in the sleeping place 1 as a premise. In the first modification, when it is determined that the monitored person Ob has performed the behavior for getting in the sleeping place 1 (first behavior) and it is subsequently determined that the monitored person Ob has performed the behavior estimated as a behavior for leaving from the bed (second behavior), it is determined that the monitored person Ob has left the bed. According to the first modification, it is possible to reduce erroneous determination that the monitored person Ob has left from the bed in comparison with the method of determining that the monitored person Ob has left the bed on the basis of only the determination that the monitored person Ob has performed the second behavior.

The second modification will be described. With reference to Fig. 3, in the embodiment, the extraction unit 11 and the determination unit 12 are included in the sensor device SU. Whereas, in the second modification, these units are included in the management server device SV illustrated in Fig. 1. The SU control processing unit 13 included in the modification instructs the SU communication IF unit 14 to transmit the moving image MI imaged by the imaging unit 10 to the management server device SV. The SU communication IF unit 14 changes the moving image MI into a communication signal which can be communicated with a communication unit (not shown) of the management server device SV and transmits the signal to the management server device SV.

In the embodiment, the imaging unit 10 functions as an acquisition unit for acquiring a first image and a second image in a predetermined range including the monitored person Ob. Whereas, in the second modification, the communication unit of the management server device SV has a function of the acquisition unit.

### (Summary of Embodiment)

A behavior determination device according to a first aspect of the embodiment includes an acquisition unit which acquires a first image and a second image in a predetermined range including a monitored person to be monitored, an extraction unit which extracts a human body area from the first image and the second image, and a determination unit which performs first setting for setting a plurality of first areas of interest used in determining whether or not a predetermined first behavior has been performed to the first image with an equal space therebetween, determines whether or not the monitored person has performed the first behavior on the basis of the plurality of first areas of interest and the human body area, performs second setting for setting a second area of interest used in determining whether or not a predetermined second behavior has been performed to the second image, and determines whether or not the monitored person has performed the second behavior on the basis of the second area of interest and the human body area.

In the behavior determination device according to the first aspect of the embodiment, an area of interest used in determining the first behavior (plurality of first areas of interest set with equal space therebetween) and an area of interest used in determining the second behavior (second area of interest) are separated from each other. Therefore, the area of interest to be set in the image can be changed according to the behavior to be determined. For example, an optimal area of interest for the determination of the first behavior can be set to the area of interest used for the determination of the first behavior, and an optimal area of interest for the determination of the second behavior can be set to the area of interest used for the determination of the second behavior. Therefore, according to the behavior determination device according to the first aspect of the embodiment, erroneous determination can be reduced.

The first image and the second image may be the same or different from each other.

In the above configuration, the determination unit determines that the monitored person has performed a predetermined behavior when it is determined that the monitored person has performed the second behavior after determining that the monitored person has performed the first behavior.

With this configuration, the first behavior and the second behavior are combined to determine the predetermined behavior. This configuration includes a first mode and a second mode below.

In the first mode, the first image and the second image include a sleeping place area which is an area indicating a sleeping place, the first behavior indicates that the monitored person lies on the sleeping place, the second behavior indicates that the monitored person takes out a part of the body from the sleeping place, the determination unit performs setting for arranging the plurality of first areas of interest in the sleeping place area along the longitudinal direction of the sleeping place area with an equal space therebetween as the first setting and determines that the monitored person has performed the first behavior when the human body area exists in each of the plurality of first areas of interest, the determination unit performs setting for arranging the second area of interest along a line defining the sleeping place area as the second setting and determines whether or not the monitored person has performed the second behavior on the basis of an area of the human body area positioned outside the second area of interest, and the determination unit determines that the monitored person has got up when it is determined that the monitored person has performed the second behavior after determining that the monitored person has performed the first behavior.

In the first mode, attention is paid to the fact that when a person gets up, the person lies on the sleeping place as a premise. When the determination unit determines that the monitored person takes out a part of the body (for example, leg) from the sleeping place (determination that the second behavior has been performed) after determining that the monitored person lies on the sleeping place (determination that the first behavior has been performed), the determination unit determines that the monitored person has got up. According to the first mode, it is possible to reduce erroneous determination that the monitored person has got up in comparison with the method of determining that the monitored person has got up on the basis of only the determination that the monitored person has performed the second behavior.

When a person lies on the sleeping place, the human body area exists in each of the plurality of first areas of interest (that is, all of the plurality of first areas of interest). Therefore, when the human body area exists in each of the plurality of first areas of interest, the determination unit determines that the monitored person has performed the first behavior. Normally, when a person gets in the sleeping place and lies on the sleeping place, the head and the leg are not placed on the sleeping place at the same time, and the person lies while one of the head or the leg is placed on the sleeping place in order or the head and the leg are alternately moved little by little, and finally, both of the head and the leg are placed on the sleeping place. Therefore, after the determination unit has determined that the human body area exists in at least one of the first areas of interest, the determination unit determines that the human body area exists in each of the remaining areas of interest. In consideration of the above, when determining that the human body areas exist in the plurality of first areas of interest within a predetermined period (for example, ten seconds), the determination unit determines that the monitored person has performed the first behavior.

There are various methods for determining whether or not the monitored person has performed the second behavior on the basis of the area (the number of pixels) in the human body area positioned outside the second area of interest. However, one example is as follows. When the number of pixels in the human body area positioned outside the second area of interest ÷ (the number of pixels in the human body area positioned in the second area of interest + the number of pixels in the human body area positioned outside the second area of interest) exceeds a predetermined threshold, the determination unit determines that the second behavior has been performed.

In the second mode, the first image and the second image include a sleeping place area which is an area indicating a sleeping place, an imaging unit for imaging the first image and the second image is arranged obliquely above the sleeping place, the first behavior is a behavior of the monitored person for getting in the sleeping place, the second behavior is a behavior of the monitored person estimated as a behavior for leaving from the bed, the plurality of first areas of interest includes an intermediate area of interest overlapping with the sleeping place area in the first image, a lower area of interest positioned below the intermediate area of interest in the image, and an upper area of interest positioned above the intermediate area of interest in the image, the determination unit sets the lower area of interest, the intermediate area of interest, and the upper area of interest as the first setting and determines that the monitored person has performed the first behavior when it is determined that a first state in which the human body areas exist in the lower area of interest and the intermediate area of interest and the human body area does not exist in the upper area of interest, a second state in which the human body areas exist in the intermediate area of interest and the upper area of interest and the human body area does not exist in the lower area of interest, and a third state in which the human body area exists in the intermediate area of interest and the human body area does not exist in the lower area of interest and the upper area of interest occur in an order of the first state, the second state, and the third state, the determination unit sets the second area of interest along a line defining the sleeping place area as the second setting and determines whether or not the monitored person has performed the second behavior on the basis of an area of the human body area positioned outside the second area of interest, and the determination unit determines that the monitored person has left the bed when it is determined that the monitored person has performed the second behavior after determining that the monitored person has performed the first behavior.

In the second mode, attention is paid to the fact that when a person leaves from the bed, the person performs a behavior for getting in the sleeping place as a premise. In the second mode, when it is determined that the monitored person has performed the behavior for getting in the sleeping place (first behavior) and it is subsequently determined that the monitored person Ob performed the behavior estimated as a behavior for leaving from the bed (second behavior), it is determined that the monitored person has left the bed. According to the second mode, it is possible to reduce erroneous determination that the monitored person has left from the bed in comparison with the method of determining that the monitored person has left from the bed on the basis of only the determination that the monitored person has performed the second behavior.

There are various methods for determining whether or not the monitored person has performed the second behavior on the basis of the area (the number of pixels) in the human body area positioned outside the second area of interest. However, one example is as follows. When the number of pixels in the human body area positioned outside the second area of interest exceeds a predetermined threshold, the determination unit determines that the second behavior has been performed.

A behavior determination method according to a second aspect of the embodiment includes an acquisition step of acquiring a first image and a second image in a predetermined range including a monitored person to be monitored, an extraction step of extracting a human body area from the first image and the second image, and a determination step of performing first setting for setting a plurality of first areas of interest used in determining whether or not a predetermined first behavior has been performed to the first image with an equal space therebetween, determining whether or not the monitored person has performed the first behavior on the basis of the plurality of first areas of interest and the human body area, performing second setting for setting a second area of interest used in determining whether or not a predetermined second behavior has been performed to the second image, and determining whether or not the monitored person has performed the second behavior on the basis of the second area of interest and the human body area.

The behavior determination method according to the second aspect of the embodiment defines the behavior determination device according to the first aspect of the embodiment from viewpoint of the method and obtains an effect similar to that of the behavior determination device according to the first aspect of the embodiment.

This application is based on Japanese Patent Application No. 2016-137422 filed on July 12, 2016, and the contents of the application are included in the present application.

To express the present invention, the present invention has been appropriately and sufficiently described by using the embodiment with reference to the drawings. However, it should be recognized that those skilled in the art can easily make variations and/or modifications of the embodiment. Therefore, as long as the variations and the modifications achieved by those skilled in the art do not depart from the scope of the claims described in claims, it is interpreted that the variations and the modifications are included in the scope of the claims.

### Industrial Applicability

According to the present invention, the behavior determination device and the behavior determination method can be provided.

## Claims

1. A behavior determination device comprising:
an acquisition unit configured to acquire a first image and a second image in a predetermined range including a monitored person to be monitored;
an extraction unit configured to extract a human body area from the first image and the second image; and
a determination unit configured to perform first setting for setting a plurality of first areas of interest used in determining whether or not a predetermined first behavior has been performed to the first image with an equal space therebetween, determine whether or not the monitored person has performed the first behavior on the basis of the plurality of first areas of interest and the human body area, perform second setting for setting a second area of interest used in determining whether or not a predetermined second behavior has been performed to the second image, and determine whether or not the monitored person has performed the second behavior on the basis of the second area of interest and the human body area.

2. The behavior determination device according to claim 1, wherein the determination unit determines that the monitored person has performed a predetermined behavior when it is determined that the monitored person has performed the second behavior after determining that the monitored person has performed the first behavior.

3. The behavior determination device according to claim 2, wherein
the first image and the second image include a sleeping place area which is an area indicating a sleeping place,
the first behavior indicates that the monitored person lies on the sleeping place,
the second behavior indicates that the monitored person takes out a part of the body from the sleeping place,
the determination unit performs setting for arranging the plurality of first areas of interest in the sleeping place area along a longitudinal direction of the sleeping place area with an equal space therebetween as the first setting and determines that the monitored person has performed the first behavior when the human body area exists in each of the plurality of first areas of interest,
the determination unit performs setting for arranging the second area of interest along a line defining the sleeping place area as the second setting and determines whether or not the monitored person has performed the second behavior on the basis of an area of the human body area positioned outside the second area of interest, and
the determination unit determines that the monitored person has got up when it is determined that the monitored person has performed the second behavior after determining that the monitored person has performed the first behavior.

4. The behavior determination device according to claim 2, wherein
the first image and the second image include a sleeping place area which is an area indicating a sleeping place,
an imaging unit for imaging the first image and the second image is arranged obliquely above the sleeping place,
the first behavior is a behavior of the monitored person for getting in the sleeping place,
the second behavior is a behavior of the monitored person estimated as a behavior for leaving from the bed,
a plurality of first areas of interest includes an intermediate area of interest overlapping with the sleeping place area in the first image, a lower area of interest positioned below the intermediate area of interest in the image, and an upper area of interest positioned above the intermediate area of interest in the image,
the determination unit sets the lower area of interest, the intermediate area of interest, and the upper area of interest as the first setting and determines that the monitored person has performed the first behavior when it is determined that a first state in which the human body areas exist in the lower area of interest and the intermediate area of interest and the human body area does not exist in the upper area of interest, a second state in which the human body areas exist in the intermediate area of interest and the upper area of interest and the human body area does not exist in the lower area of interest, and a third state in which the human body area exists in the intermediate area of interest and the human body area does not exist in the lower area of interest and the upper area of interest occur in an order of the first state, the second state, and the third state,
the determination unit sets the second area of interest along a line defining the sleeping place area as the second setting and determines whether or not the monitored person has performed the second behavior on the basis of an area of the human body area positioned outside the second area of interest, and
the determination unit determines that the monitored person has left the bed when it is determined that the monitored person has performed the second behavior after determining that the monitored person has performed the first behavior.

5. A behavior determination method comprising:
an acquisition step of acquiring a first image and a second image in a predetermined range including a monitored person to be monitored;
an extraction step of extracting a human body area from the first image and the second image; and
a determination step of performing first setting for setting a plurality of first areas of interest used in determining whether or not a predetermined first behavior has been performed to the first image with an equal space therebetween, determining whether or not the monitored person has performed the first behavior on the basis of the plurality of first areas of interest and the human body area, performing second setting for setting a second area of interest used in determining whether or not a predetermined second behavior has been performed to the second image, and determining whether or not the monitored person has performed the second behavior on the basis of the second area of interest and the human body area.
